# EUROPÄISCHE PATENTANMELDUNG

(11) **EP 1 028 132 A1**
(43) Veröffentlichungstag der Anmeldung: **16.08.2000**
(21) Anmeldenummer: 00100899.4
(22) Anmeldetag: 18.01.2000
(51) Int. Cl.: C08G 18/08, C08G 18/32, C08G 18/66

(54) **Verfahren zur Herstellung von thermoplastischen Polyurethanen**

(30) Priorität: 09.02.1999 DE 19905138
(71) Anmelder: BASF AKTIENGESELLSCHAFT, 67056 Ludwigshafen (DE)
(72) Erfinder: Servay, Thomas, Dr., 67550 Worms (DE)

(57) **Zusammenfassung**

Verfahren zur Herstellung von thermoplastischen Polyurethanen mit einer Vicat-Temperatur von ≥140°C, einer Shore-Härte von 70 A bis 55 D und einem Yellowness-Index nach DIN 54004 nach 504 Stunden von ≤10 durch Umsetzung von (a) Isocyanaten mit (b) gegenüber Isocyanaten reaktiven Verbindungen mit einem Molekulargewicht von 500 bis 8000 in Gegenwart von (c) Kettenverlängerungsmitteln mit einem Molekulargewicht von 60 bis 499 und gegebenenfalls (d) Katalysatoren und/oder (e) üblichen Hilfs- und/oder Zusatzstoffen, wobei man als Isocyanate (a) aliphatische und/oder cycloaliphatische Isocyanate und als Kettenverlängerungsmittel (c) mindestens eine araliphatische, aromatische und/oder cycloaliphatische Verbindung einsetzt.

## Beschreibung

Die Erfindung bezieht sich auf Verfahren zur Herstellung von thermoplastischen Polyurethanen mit einer Vicat-Temperatur von ≥140°C, bevorzugt ≥150°C, besonders bevorzugt 160 bis 250°C, einer Shore-Härte von 70 A bis 55 D und einem Yellowness-Index nach DIN 54004 nach 504 Stunden von ≤10, bevorzugt <10, besonders bevorzugt 4 bis 9,9, durch Umsetzung von (a) Isocyanaten mit (b) gegenüber Isocyanaten reaktiven Verbindungen mit einem Molekulargewicht von 500 bis 8000 in Gegenwart von (c) Kettenverlängerungsmitteln mit einem Molekulargewicht von 60 bis 499 und gegebenenfalls (d) Katalysatoren und/oder (e) üblichen Hilfs- und/oder Zusatzstoffen sowie die mit diesem Verfahren herstellbaren thermoplastischen Polyurethanen und deren Verwendung.

Thermoplastische Polyurethane, im Folgenden auch als TPU bezeichnet, und Verfahren zu deren Herstellung sind allgemein bekannt und vielfältig beschrieben. Diese TPUs sind teilkristalline Werkstoffe und gehören zu der Klasse der thermoplastischen Elastomere. Sie bestehen aus einem teilkristallinen Hartblock, der sich aus dem Isocyanat und niedermolekularem Kettenverlängerer aufbaut, und einem amorphen Weichblock, der typischerweise aus den höhermolekularen gegenüber Isocyanaten reaktiven Verbindungen, üblicherweise Polyester- und/oder Polyetherdiolen, aufgebaut wird. Eine möglichst gute mikromorphologische Entmischung dieser Phasen ist die notwendige Voraussetzung für das elastische Verhalten der TPUs. Der Hartblock wirkt aufgrund seiner Teilkristallinität als physikalische Vernetzung, die sich oberhalb des Hartblockschmelzpunktes reversibel auflöst, was die thermoplastische Verformung des Materials ermöglicht. Der Weichblock befindet sich bei Raumtemperatur in einem plastischen oder flüssigen Zustand, auf ihn läßt sich letztendlich die leichte Verformbarkeit des TPUs zurückführen. Die physikalische Vernetzung ermöglicht dabei die elastische Rückkehr in den Ausgangszustand.

Die TPUs zeichnen sich durch eine Kombination von vorteilhaften Stoffeigenschaften, wie beispielsweise einem geringen Abrieb, einer guten Chemikalienbeständigkeit sowie einer hohen Flexibilität bei einer gleichzeitig hohen Festigkeit aus. TPUs auf Basis aliphatischer Rohstoffe haben außerdem den Vorteil einer besonders guten Lichtechtheit. Zusätzlich bieten sie Vorteile durch die kostengünstige Herstellung, beispielsweise mit dem Band- oder dem Extruderverfahren, die kontinuierlich oder diskontinuierlich durchgeführt werden können, und die einfache Thermoplastverarbeitung.

Durch Variation der Ausgangskomponenten lassen sich Produkte mit einer breiten Eigenschaftspalette in einem weiten Härtebereich herstellen. Die Wärmeformbeständigkeit und damit auch die Gebrauchseigenschaften des Materials bei Temperaturen vor allem oberhalb von 80°C werden überwiegend durch das Schmelzverhalten des Hartsegmentblocks, also der Qualität der physikalischen Vernetzung, bestimmt. Die Lichtechtheit der Materialien hängt vom Gehalt an aromatischen Struktureinheiten ab.

Thermoplastische Polyurethane, die üblicherweise auf Basis von (a) MDI, (b) Polyester- und/oder Polyetherdiolen und (c) Butandiol hergestellt werden, verlieren typischerweise oberhalb von 80°C teilweise ihre Wärmeformbeständigkeit, das heißt, das Material kehrt nicht mehr reversibel in seinen Ausgangszustand zurück. Um TPUs unter statischer oder dynamischer Belastung bei höheren Anwendungstemperaturen einsetzen zu können, muß die Wärmeformbeständigkeit im Vergleich zu bekannten TPUs verbessert werden. Des weiteren weisen die TPUs, die auf MDI als Isocyanat basieren, den Nachteil auf, daß sie am Tageslicht nach längerem Gebrauch vergilben. Dieser Effekt ist bei exponierten Anwendungen unerwünscht. Dieses Problem kann durch die Verwendung von aliphatischen Isocyanaten vermieden werden. TPUs auf der Basis von aliphatischen Isocyanaten weisen jedoch im Vergleich zu denen auf der Basis von aromatischen Isocyanaten den Nachteil auf, daß sie eine deutlich geringere Wärmeformbeständigkeit aufweisen. Die Wärmeformbeständigkeit und damit auch die Gebrauchseigenschaften des Materials werden bei höheren Temperaturen überwiegend durch das Schmelzverhalten des Hartsegmentblocks bestimmt. Bei den Hartphasen der TPUs auf der Basis von aliphatischen Isocyanaten liegen die Schmelzpunkte dieser Hartphasen deutlich niedriger als bei den Hartphasen der TPUs, die auf aromatischen Isocyanaten basieren. Wünschenswert wäre ein Material, das gleichzeitig die Lichtechtheit von TPUs auf Basis aliphatischer Isocyanate und die Wärmeformbeständigkeit von TPUs auf Basis aromatischer Isocyanate aufweist.

Eine Verbesserung der Wärmestandfestigkeit von TPUs durch den Einsatz von aromatischen Kettenverlängerungsmitteln wird in EP-A 718 335 beschrieben. Nachteilig an den in den Beispielen dieser Schrift beschriebenen TPUs wirkt sich deren mangelhafte Lichtechtheit aus. GB 1 126 963 beschreibt TPUs auf der Basis von substituiertem Hexamethylendiisocyanat sowie aliphatischen, cycloaliphatischen oder aromatischen Kettenverlängerungsmitteln (Anspruch 6 in Kombination mit Anspruch 1). Eine technische Lehre zur Verbesserung der Wärmestandfestigkeit oder der Lichtechtheit eines TPUs wird in der GB 1 126 963 nicht gegeben.

Ziel der vorliegenden Erfindung war es somit, Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 8000 in Gegenwart von (c) Kettenverlängerungsmitteln mit einem Molekulargewicht von 60 bis 499 und gegebenenfalls (d) Katalysatoren und/oder (e) üblichen Hilfs- und/oder Zusatzstoffen zu entwickeln, mit denen lichtechte Produkte mit einer sehr guten Wärmeformbeständigkeit, d.h. thermoplastische Polyurethane mit einer Vicat-Temperatur von ≥140 °C, einer Shore-Härte von 70 A bis 55 D und einem Yellowness-Index nach DIN 54004 nach 504 Stunden von ≤10, zugänglich sind.

Diese Aufgabe konnte dadurch gelöst werden, daß man als Isocyanate (a) aliphatische und/oder cycloaliphatische, bevorzugt aliphatische Isocyanate, und als Kettenverlängerungsmittel (c) mindestens eine araliphatische, aromatische und/oder cycloaliphatische, bevorzugt araliphatische und/oder aromatische, Verbindung einsetzt.

Verfahren zur Herstellung von TPUs sind allgemein bekannt und unterscheiden sich von Verfahren zur Herstellung von nicht thermoplastisch verarbeitbaren Polyisocyanat-Polyadditionsprodukten hauptsächlich dadurch, daß man chemische Vernetzungen in dem Produkt weitgehend vermeidet und somit als gegenüber Isocyanaten reaktive Verbindungen (b) bevorzugt solche einsetzt, die eine mittlere Funktionalität von 1,8 bis 2,6, besonders bevorzugt 1,9 bis 2,2, insbesondere 2, aufweisen, und bevorzugt auf Vernetzungsmittel, d.h. gegenüber Isocyanaten reaktive Verbindungen mit einem Molekulargewicht <499 und einer Funktionalität von ≥3 weitgehend, besonders bevorzugt vollständig verzichtet.

Im Folgenden sollen beispielhaft die Ausgangskomponenten und Verfahren zur Herstellung der bevorzugten TPUs dargestellt werden.

Die bei der Herstellung der TPUs üblicherweise verwendeten Komponenten (a), (b), (c) sowie gegebenenfalls (e) und/oder (f) sollen im Folgenden beispielhaft beschrieben werden:
a) Als organische Isocyanate (a) werden erfindungsgemäß aliphatische und/oder cycloaliphatische Isocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat. Bevorzugt wird Hexamethylen-1,6-diisocyanat (Hexamethylendiisocyanat, HDI) als Isocyanat eingesetzt.
b) Als gegenüber Isocyanaten reaktive Verbindungen (b) können beispielsweise Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden. Bevorzugt setzt man als (b) Polyesterole und/oder Polyetherole (und/oder Polycarbonatdiole ein, besonders bevorzugt Polyesterdiole, beispielsweise Polycaprolacton, und/oder Polyetherpolyole, beispielsweise solche auf der Basis von Ethylenoxid, Propylenoxid und/oder Butylenoxid, bevorzugt Polypropylenglykol, insbesondere Polyetherole.
c) Als Kettenverlängerungsmittel (c) werden erfindungsgemäß araliphatische, aromatische und/oder cycloaliphatische, bevorzugt araliphatische und/oder aromatische Verbindungen mit einem Molekulargewicht von 60 bis 499, bevorzugt 2-funktionelle Verbindungen, bevorzugt substituierte Benzole, besonders bevorzugt 1,4-, 1,3- und/oder 1,2-Bis-(3-hydroxypropyl)-benzol, 1,4-, 1,3- und/oder 1,2-Bis(2-hydroxyethyl)-benzol, 1,4-, 1,3- und/oder 1,2-Bis-(2-hydroxyethoxy)-benzol und/oder 1,2-, 1,3- und/oder 1,4-Bis-(hydroxymethyl)-benzol, besonders bevorzugt 1,3- und/oder 1,4-Bis-(hydroxymethyl)-benzol eingesetzt.
   Gegebenenfalls können zusätzlich zu den erfindungsgemäßen Kettenverlängerungsmitteln (c) weitere, allgemein bekannte Kettenverlängerer (ci) eingesetzt werden, beispielsweise Diamine und/oder Alkandiole mit 2 bis 10 C-Atomen im Alkylenrest, insbesondere Butandiol-1,4 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können. Besonders bevorzugt werden ausschließlich die erfindungsgemäßen Kettenverlängerungsmittel eingesetzt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren können den Aufbaukomponenten (a) bis (d) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Stabilisatoren, Gleit- und Entformungshilfen, Farbstoffe und Pigmente, Inhibitoren, Stabilisatoren gegen Hydrolyse, Licht, Hitze oder Verfärbung, Schutzmittel gegen mikrobiellen Abbau, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.
Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 1 : 0,5 bis 1 : 8, insbesondere von 1 : 1 bis 1 : 4, wobei die Härte der TPUs mit zunehmendem Gehalt an (c) ansteigt.

Die Umsetzung kann bei üblichen Kennzahlen erfolgen, bevorzugt bei einer Kennzahl von 90 bis 120, besonders bevorzugt bei einer Kennzahl von 97 bis 115. Die Kennzahl ist definiert durch das Verhältnis der insgesamt bei der Umsetzung eingesetzten Isocyanatgruppen der Komponente (a) zu den gegenüber Isocyanaten Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c).

Bei Kennzahlen über 100 liegen mehr Isocyanatgruppen als OH-Gruppen vor.

Der Isocyanatindex, auch Kennzahl genannt, ist die tatsächlich eingesetzte Menge an Isocyanatgruppen dividiert durch die theoretisch zur vollständigen Umsetzung aller OH-Gruppen notwendigen Menge an Isocyanatgruppen multipliziert mit 100.

Die Herstellung der TPUs kann nach den bekannten Verfahren kontinuierlich mit Reaktionsextrudern oder diskontinuierlich nach dem bekannten Prepolymerprozeß erfolgen. Bei diesen Verfahren können die zur Reaktion kommenden Komponenten (a), (b) und gegebenenfalls (c) nacheinander oder gleichzeitig miteinander vermischt werden, wobei die Reaktion unmittelbar einsetzt.

Bevorzugt wird die Umsetzung im Reaktionsextruder durchgeführt.

Wie bereits dargelegt wurde, kann das Reaktionsgemisch enthaltend (a), (b), (c) und gegebenenfalls (d) und/oder (e) vorzugsweise nach dem Extruderverfahren oder nach dem Präpolymerverfahren bzw. im Labor auch nach dem one-shot-Verfahren umgesetzt werden.

Beim Extruderverfahren werden die Aufbaukomponenten (a) bis (c) sowie gegebenenfalls (d) und/oder (e) einzeln oder als Gemisch in den Extruder eingeführt, z.B. bei Temperaturen von 100 bis 250°C, vorzugsweise 140 bis 220°C, zur Reaktion gebracht, das erhaltene TPU wird extrudiert, abgekühlt und granuliert.

Die Verarbeitung der erfindungsgemäß hergestellten TPUs, die üblicherweise als Granulat oder in Pulverform vorliegen, zu den gewünschten Folien Fasern, Formteile, Verkleidungen in Automobilen, Rollen, Dichtungen, Kabelstecker, Faltenbälge, Schläuche, Kabelummantelungen, Schleppkabel, Riemen oder Dämpfungselemente, insbesondere Folien, erfolgt nach üblichen Verfahren, wie z.B. Spritzguß oder Extrusion.

Die nach den erfindungsgemäßen Verfahren herstellbaren thermoplastischen Polyurethane, insbesondere die Folien, Fasern, Formteile, Verkleidungen in Automobilen, Rollen, Dichtungen, Kabelstecker, Faltenbälge, Schläuche, Kabelummantelungen, Schleppkabel, Riemen oder Dämpfungselemente, insbesondere Folien weisen die gewünscht hohe Wärmeformbeständigkeit, gekennzeichnet durch eine Vicat-Temperatur von ≥140°C, bevorzugt ≥150°C, einer Shore-Härte von 70 A bis 55 D und eine hohe Lichtechtheit, charakterisiert durch einen Yellowness-Index nach DIN 54004 nach 504 Stunden von ≤10, bevorzugt <10, auf.

Sowohl die hohe Wärmeformbeständigkeit für ein TPU auf der Basis (cyclo)aliphatischer Isocyanate als auch die im Vergleich zu TPUs auf der Basis aromatischer Isocyanate sehr gute Lichtechtheit waren für den Fachmann überraschend. Es war naheliegend, bei dem bevorzugten Einsatz von aromatischen Kettenverlängerungsmitteln zu vermuten, daß die TPUs eine Tendenz zur Vergilbung aufweisen würden, die mit der von TPUs auf der Basis aromatischer Isocyanate vergleichbar wäre. Die erfindungsgemäß sehr hohe Lichtechtheit war nicht zu erwarten.

Die erfindungsgemäßen Vorteile sollen anhand der folgenden Beispiele dargestellt werden.

### Herstellung der TPUs

### Beispiel 1

Eine auf 110°C erwärmte Mischung enthaltend 179,8 g Lupranol® VP 9066 (BASF Aktiengesellschaft) und 20 ppm Dibutylzinndilaurat (Merck-Schucha) wurde unter Rühren mit 32,03 g Hexamethylendiisocyanat zur Reaktion gebracht. Nach Reaktion für eine Dauer von 30 min bei gleicher Temperatur wurden bei erhöhter Rührgeschwindigkeit 8,17 g 1,4-Butandiol zugegeben. Nach Erreichen einer Temperatur im Reaktionsgemisch von 120°C wurde das Gemisch in eine flache Schale gegossen und 20 min bei 120°C ausgehärtet. Nach einer Temperung für 24 h bei 100°C wurde das Material granuliert und mittels Spritzguß zu Prüfkörpern verarbeitet.

### Beispiel 2

Eine auf 100°C erwärmte Mischung enthaltend 164,97 g Lupranol® VP 9066 (BASF Aktiengesellschaft) und 16,07 g 1,4-Butandiol wurde unter Rühren mit 68,97 g MDI, das mit einer Temperatur von 50°C dem Gemisch zugegeben wurde, zur Reaktion gebracht. Nach Erreichen einer Temperatur im Reaktionsgemisch von 120°C wurde das Gemisch in eine flache Schale gegossen und 20 min bei 120°C ausgehärtet. Nach einer Temperung für 24 h bei 100°C wurde das Material granuliert und mittels Spritzguß zu Prüfkörpern verarbeitet.

### Beispiel 3

Eine auf 110°C erwärmte Mischung enthaltend 162,07 g Capa® 223 (Solvay Interox), 29,86 g 1,4-Bis-(hydroxymethyl)-benzol und 20 ppm Dibutylzinndilaurat (Merck-Schucha) wurde unter Rühren mit 53,07 g Hexamethylendiisocyanat zur Reaktion gebracht. Nach Erreichen einer Temperatur im Reaktionsgemisch von 120°C wurde das Gemisch in eine flache Schale gegossen und 20 min bei 120°C ausgehärtet. Nach einer Temperung für 24 h bei 100°C wurde das Material granuliert und mittels Spritzguß zu Prüfkörpern verarbeitet.

Die Eigenschaften der TPUs sind in der Tabelle 1 dargestellt.

**Tabelle 1**

| Beispiel | 1 | 2 | 3 |
|---|---|---|---|
| | | | |
| Härte Shore A | 87 | 85 | 90 |
| Vicat-Temperatur [°C] | 50 | 136 | 168 |
| Yellowness-Index nach DIN 54004 (nach 45 h) | 10,4 | 23,7 | 9,8 |
| Yellowness-Index nach DIN 54004 (nach 168 h) | 10,3 | 61,5 | 9,4 |
| Yellowness-Index nach DIN 54004 (nach 228 h) | 10,5 | 76,4 | 8,6 |
| Yellowness-Index nach DIN 54004 (nach 504 h) | 11,4 | 90,1 | 9,0 |

TPUs auf der Basis von Hexamethylendiisocyanat (Beispiel 1) weisen üblicherweise im Vergleich zu TPUs auf der Basis von MDI (Beispiel 2) eine deutlich geringere Wärmeformbeständigkeit auf. Überraschenderweise zeigen die erfindungsgemäßen TPUs gemäß Beispiel 3 sogar eine bessere Wärmeformbeständigkeit als TPUs auf der Basis von MDI. Die verbesserte Wärmeformbeständigkeit konnte auch anhand von Torsionsschwingungskurven nachgewiesen werden. Zusätzlich konnte das gestellte Ziel, lichtechte TPUs zu entwickeln, erreicht werden. Das TPU des erfindungsgemäßen Beispiels 3 zeigt eine deutlich geringere Vergilbung als das Vergleichsprodukt des Beispiels 1. Als weiterer Vorteil des erfindungsgemäßen Materials ist zu nennen, daß im Gegensatz zum TPU des Beispiels 1 kein Ausblühen von niedermolekularen Reaktionsprodukten, d.h. Migration aus den TPU, zu beobachten war.

## Patentansprüche

1. Verfahren zur Herstellung von thermoplastischen Polyurethanen mit einer Vicat-Temperatur von ≥140°C, einer Shore-Härte von 70 A bis 55 D und einem Yellowness-Index nach DIN 54004 nach 504 Stunden von ≤10 durch Umsetzung von (a) Isocyanaten mit (b) gegenüber Isocyanaten reaktiven Verbindungen mit einem Molekulargewicht von 500 bis 8000 in Gegenwart von (c) Kettenverlängerungsmitteln mit einem Molekulargewicht von 60 bis 499 und gegebenenfalls (d) Katalysatoren und/oder (e) üblichen Hilfs- und/oder Zusatzstoffen, dadurch gekennzeichnet, daß man als Isocyanate (a) aliphatische und/oder cycloaliphatische Isocyanate und als Kettenverlängerungsmittel (c) mindestens eine araliphatische, aromatische und/oder cycloaliphatische Verbindung einsetzt.

2. Verfahren nach Anspruch 1, dadurch gekennzeichnet, daß man als (a) aliphatische Isocyanate einsetzt.

3. Verfahren nach Anspruch 1, dadurch gekennzeichnet, daß man als (c) substituierte Benzole einsetzt.

4. Verfahren nach Anspruch 1, dadurch gekennzeichnet, daß man als (c) 1,4-, 1,3- und/oder 1,2-Bis-(3-hydroxypropyl)-benzol, 1,4-, 1,3- und/oder 1,2-Bis(2-hydroxyethyl)-benzol, 1,4-, 1,3- und/oder 1,2-Bis-(2-hydroxyethoxy)-benzol und/oder 1,2-, 1,3- und/oder 1,4-Bis-(hydroxymethyl)-benzol einsetzt.

5. Verfahren nach Anspruch 1, dadurch gekennzeichnet, daß man als (c) 1,3- und/oder 1,4-Bis-(hydroxymethyl)-benzol einsetzt.

6. Verfahren nach Anspruch 1, dadurch gekennzeichnet, daß man die Umsetzung bei einer Kennzahl von 97 bis 115 durchführt.

7. Thermoplastische Polyurethane mit einer Vicat-Temperatur von ≥140°C, einer Shore-Härte von 70 A bis 55 D und einem Yellowness-Index nach DIN 54004 nach 504 Stunden von ≤10 erhältlich durch ein Verfahren gemäß einem der Ansprüche 1 oder 6.

8. Verwendung von Hexamethylendiisocyanat und 1,3- und/oder 1,4-Bis-(hydroxymethyl)-benzol zur Herstellung von thermoplastischen Polyurethanen mit einer Vicat-Temperatur von ≥140°C, einer Shore-Härte von 70 A bis 55 D und einem Yellowness-Index nach DIN 54004 nach 504 Stunden von ≤10.

9. Verwendung von thermoplastischen Polyurethanen gemäß Anspruch 7 als Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente.

10. Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend thermoplastische Polyurethane gemäß Anspruch 7.
